# EUROPÄISCHE PATENTANMELDUNG

(11) **EP 4 343 128 A1**
(43) Veröffentlichungstag der Anmeldung: **27.03.2024**
(21) Anmeldenummer: 23183779.0
(22) Anmeldetag: 06.07.2023
(51) Int. Cl.: F01P 11/02, B60K 11/02, F16K 31/18

(54) **TEMPERIERSYSTEM MIT AUSGLEICHSBEHÄLTER UND SCHWIMMERVENTIL**

(30) Priorität: 07.09.2022 DE 102022209320
(71) Anmelder: VOLKSWAGEN AG, 38440 Wolfsburg (DE)
(72) Erfinder: Correia, Claudenê, 38116 Braunschweig (DE)

(57) **Zusammenfassung**

Ein Temperiersystem mit einem Temperierkreis (1), in den mindestens eine Temperiermittelpumpe (2), eine zu temperierende Vorrichtung (3) und ein Temperiermittelkühler (4), integriert sind, die über Temperiermittelleitungen (5) fluidleitend miteinander verbunden sind, und mit einem Ausgleichsbehälter (6), der mittels einer Entlüftungsleitung (7) und einer Ausgleichsleitung (8) mit dem Temperierkreis (1) verbunden ist, ist dadurch gekennzeichnet, dass in die Entlüftungsleitung (7) ein Schwimmerventil (9) integriert ist, das derart ausgestaltet ist, dass dieses infolge einer Gasansammlung öffnet.

## Beschreibung

Die Erfindung betrifft ein Temperiersystem für ein Kraftfahrzeug.

Kraftfahrzeuge, unabhängig davon, ob diese mittels einer Brennkraftmaschine und/oder eines elektrischen Traktionsmotors angetrieben werden, umfassen in der Regel ein Temperiersystem zur Temperierung (d.h. bedarfsweise zur Kühlung und/oder Beheizung) von Vorrichtungen des Kraftfahrzeugs. Derartige Vorrichtungen können bei einem (auch) mittels einer Brennkraftmaschine antreibbaren Kraftfahrzeug beispielsweise ein Verbrennungsmotor der Brennkraftmaschine, ein Ladeluftkühler, ein Abgasturbolader und/oder ein Ölkühler sein. Bei einem (auch) mittels eines elektrischen Traktionsmotors antreibbaren Kraftfahrzeugs können insbesondere der Traktionsmotor, eine gegebenenfalls vorgesehene Traktionsbatterie, über die der Traktionsmotor mit der für den Betrieb erforderlichen elektrischen Leistung versorgt wird, eine Leistungselektronik und/oder ein gegebenenfalls vorgesehenes Ladegerät für die Traktionsbatterie mittels eines Temperiersystems des Kraftfahrzeugs temperierbar sein. Neben solchen zu temperierenden Vorrichtungen umfasst ein Temperiersystem eines Kraftfahrzeugs üblicherweise zumindest einen Temperiermittelkühler, in dem bedarfsweise eine Rückkühlung des Temperiermittels durch einen Wärmeübergang auf Umgebungsluft erfolgen kann, und eine Temperiermittelpumpe zur Förderung des Temperiermittels in dem Temperiermittelkreis.

Weiterhin umfasst ein Temperiersystem eines Kraftfahrzeugs üblicherweise einen sogenannten Ausgleichsbehälter. Hierbei handelt es sich um ein Reservoir für das Temperiermittel des Temperiersystems, das dazu dient, insbesondere temperaturbedingte Volumenänderungen des Temperiermittels durch eine Veränderung des Füllstands des Temperiermittels in einem Ausgleichsraum des Ausgleichsbehälters auszugleichen. Dazu kann ein solcher Ausgleichsbehälter insbesondere teilweise mit dem Temperiermittel und teilweise mit einem Gas, insbesondere Luft, gefüllt sein. Ein Befüllen des Temperiersystems mit dem Temperiermittel kann ebenfalls über den Ausgleichsbehälter erfolgen.

Ein Ausgleichsbehälter kann einerseits über mindestens eine sogenannte Entlüftungsleitung und weiterhin über mindestens eine sogenannte Ausgleichsleitung mit einem oder mehreren Temperierkreisen eines Temperiersystems verbunden sein. Eine Entlüftungsleitung zweigt dabei üblicherweise an einer relativ hoch gelegenen Stelle des Temperierkreises, an der sich Gas ansammelt, ab. Eine solche Entlüftungsleitung dient folglich grundsätzlich dazu, ein solches Gas in den Ausgleichsbehälter zu überführen und damit den Temperierkreis zu entlüften, während eine Ausgleichsleitung dafür vorgesehen ist, ein Überströmen von Temperiermittel zwischen dem Temperierkreis und dem Ausgleichsbehälter zur Erzielung eines Volumenausgleichs und auch bei einem Befüllen des Temperiersystems mit dem Temperiermittel zu ermöglichen.

Infolge der Förderung von Temperiermittel in einem Temperierkreis unter einem relativ hohen Förderdruck kann es dazu kommen, dass Temperiermittel auch über eine Entlüftungsleitung in einen Ausgleichsbehälter überströmt, womit funktionale Nachteile, insbesondere eine Verringerung des Volumenstroms in dem Temperierkreis (insbesondere bei einer relativ nah an der Druckseite einer Temperiermittelpumpe liegenden Abzweigung der Entlüftungsleitung) und/oder eine Verringerung der Temperierwirkung (hinsichtlich einer Kühlwirkung insbesondere bei einer relativ nah an einem Einlass des Temperiermittelkühlers liegenden Abzweigung der Entlüftungsleitung und hinsichtlich einer Heizwirkung insbesondere bei einer relativ nah an einem Auslass des Temperiermittelkühlers liegenden Abzweigung der Entlüftungsleitung) verbunden sein können.

Die DE 10 2016 009 664 A1 offenbart eine Kühleinrichtung für eine Verbrennungskraftmaschine eines Kraftfahrzeugs, bei der ein oder mehrere sogenannte Schnellentlüfter in einen Kühlkreis integriert sind. Die Schnellentlüfter können ein Schwimmerventil umfassen, das bei einer Gasansammlung öffnet und dadurch das Gas an die Umgebung entlüftet. Durch die Verwendung solcher Schnellentlüfter soll auf eine Anbindung eines Ausgleichsbehälters an den Kühlmittelkreis über eine Entlüftungsleitung verzichtet werden können.

Der Erfindung liegt die Aufgabe zugrunde, ein Temperiersystem hinsichtlich der Anbindung eines Ausgleichsbehälters zu verbessern.

Diese Aufgabe ist bei einem Temperiersystem gemäß dem Patentanspruch 1 gelöst. Ein Kraftfahrzeug mit einem solchen Temperiersystem ist Gegenstand des Patentanspruchs 5. Vorteilhafte Ausgestaltungsformen des erfindungsgemäßen Temperiersystems und damit des erfindungsgemäßen Kraftfahrzeugs sind Gegenstände der weiteren Patentansprüche und ergeben sich aus der nachfolgenden Beschreibung der Erfindung.

Der Erfindung liegt die Erkenntnis zugrunde, dass die Problematik, die aus einer ungewollten Durchströmung einer Entlüftungsleitung, die einen Temperierkreis mit einem Ausgleichsbehälter eines Temperiersystems fluidleitend verbindet, resultiert, durch die Integration eines Ventils in die Entlüftungsleitung vermieden werden kann, indem dieses Ventil eine solche Durchströmung bedarfsweise verhindert, andererseits bedarfsweise aber auch ein Entlüften ermöglicht. Ein solches Ventil kann grundsätzlich manuell oder aktiv angesteuert betätigt (insbesondere elektrisch) ausgestaltet sein. Auch eine Ausgestaltung als Thermostatventil ist möglich. Derartige Ventile können jedoch für die vorgesehene Verwendung funktional und/oder von der Handhabung nachteilig sein. Erfindungsgemäß ist daher die Verwendung eines selbstgesteuerten Ventils vorgesehen, womit zusätzlich diese funktionalen und/oder handhabungstechnischen Nachteile der anderen Ventile vermieden werden können. Vorteilhaft umgesetzt werden kann ein solches selbstgesteuertes Ventil als Schwimmerventil.

Dementsprechend ist ein Temperiersystem mit mindestens einem Temperierkreis vorgesehen, in den zumindest eine Temperiermittelpumpe, eine zu temperierende Vorrichtung (z.B. eine oder mehrere der folgenden Vorrichtungen: Verbrennungsmotor, Ladeluftkühler, Abgasturbolader, Ölkühler, elektrischer Traktionsmotor, Traktionsbatterie, Leistungselektronik, Ladegerät) und ein Temperiermittelkühler integriert sind, wobei diese Komponenten zumindest teilweise über Temperiermittelleitungen fluidleitend miteinander verbunden sind. Der Temperiermittelkühler ist dabei ein Wärmetauscher, mittels dessen zumindest bedarfsweise eine Kühlung des Temperiermittels durch einen Wärmetausch mit der Umgebungsluft realisiert werden kann. Mittels der Temperiermittelpumpe kann ein flüssiges Temperiermittel in einem durch den Temperierkreis ausgebildeten Kreislauf gefördert werden. Das Temperiersystem umfasst weiterhin einen Ausgleichsbehälter, der mittels mindestens einer Entlüftungsleitung und mindestens einer Ausgleichsleitung (die nicht die Entlüftungsleitung ist) mit dem Temperierkreis verbunden ist, wobei in die Entlüftungsleitung ein Schwimmerventil integriert ist, das derart ausgebildet ist, dass dieses bei Anwesenheit einer (ausreichend großen) Gasansammlung (im Bereich eines Schwimmer des Schwimmerventils) öffnet, während dieses bei einer Abwesenheit einer solchen Gasansammlung (infolge eines Auftriebs des Schwimmers in dem Temperiermittel) schließt beziehungsweise verschlossen ist.

Das Schwimmerventil kann bei einem solchen Temperiersystem vorteilhaft in einen Abzweig der Entlüftungsleitung aus dem Temperierkreis (und damit möglicherweise auch teilweise in eine Komponente des Temperierkreises) oder in eine Mündung der Entlüftungsleitung in den Ausgleichsbehälter (und damit möglicherweise auch teilweise in den Ausgleichsbehälter) oder in einen zentralen Abschnitt der Entlüftungsleitung integriert sein.

Weiterhin bevorzugt kann vorgesehen sein, dass die Entlüftungsleitung aus einem Sammelkasten des Temperiermittelkühlers abzweigt, weil häufig in einem solchen Sammelkasten eines Temperiermittelkühlers eine verstärkte Ansammlung von Gasen erfolgt. Ein Sammelkasten eines Temperiermittelkühlers begrenzt ein Volumen, aus dem mehrere Wärmetauscherleitungen abzweigen oder in das diese mehreren Wärmetauscherleitungen münden, so dass ein Sammelkasten dazu dient, Temperiermittel zu sammeln bevor oder nachdem dieses auf die mehreren Wärmetauscherleitungen aufgeteilt wird/wurde. Durch die Aufteilung des Temperiermittels auf die mehreren Wärmetauscherleitungen kann eine möglichst große von Umgebungsluft umströmbare Wärmetauschfläche und damit eine möglichst gute Wärmeübergangsleistung des Temperiermittelkühlers realisiert werden.

Eine Ansammlung von Gasen in dem mindestens einen Temperierkreis erfolgt üblicherweise an einer oder mehreren relativ hoch gelegenen Abschnitten des Temperierkreises, insbesondere auch an einem oben gelegenen Ende eines Sammelkastens oder mehrerer Sammelkästen des Temperiermittelkühlers, so dass vorzugsweise ein Abzweig der mindestens einen Entlüftungsleitung an einer solchen Stelle vorgesehen sein kann. Ergänzend oder alternativ dazu kann vorgesehen sein, dass die Entlüftungsleitung aus einem Gasabscheider des Temperierkreises abzweigt. Ein solcher Gasabscheider ist gezielt strukturell dafür ausgelegt, ein Ansammeln von Gasen in dem Temperierkreis zu bewirken, was ermöglicht, den Abzweig der Entlüftungsleitung auch an solchen Stellen des Temperierkreis anzuordnen, die aufgrund der Lage nicht im besonderen Maße ein Ansammeln von Gas bewirken, die jedoch bezüglich des zur Verfügung stehenden Bauraums eine bessere Integration und/oder andere Vorteile, wie beispielsweise eine relativ geringe Länge der Entlüftungsleitung, ermöglichen. Ein Gasabscheider kann beispielsweise einen relativ großen, insbesondere an einer hoch gelegenen Stelle liegenden Sammelraum ausbilden und dabei insbesondere auch gegenüber dem Strömungsquerschnitt der Temperiermittelleitungen einen größeren Strömungsquerschnitt aufweisen. Auch kann ein Gasabscheider ein oder mehrere Strömungsleitelemente zur gezielten Strömungsführung des Temperiermittels aufweisen, wodurch ein Abscheiden von Gasen aus dem Temperiermittel unterstützt werden kann.

Die Erfindung betrifft auch ein Kraftfahrzeug, insbesondere ein radbasiertes und nicht schienengebundenes Kraftfahrzeug (vorzugsweise ein PKW oder ein LKW), mit einem erfindungsgemäßen Temperiersystem.

Die Erfindung wird nachfolgend anhand von in den Zeichnungen dargestellten Ausgestaltungsbeispielen näher erläutert. In den Zeichnungen zeigt, jeweils in vereinfachter Darstellung:
- Fig. 1:: ein erfindungsgemäßes Temperiersystem für ein Kraftfahrzeug;
- Fig. 2:: einen Temperiermittelkühler eines erfindungsgemäßen Temperiersystems;
- Fig. 3:: einen Abschnitt des Temperiermittelkühlers der Fig. 2 mit einem Schwimmerventil gemäß einer ersten Ausgestaltungsform;

- Fig. 4:: einen Gasabscheider eines erfindungsgemäßen Temperiersystems; und
- Fig. 5:: ein Schwimmerventil für ein erfindungsgemäßes Temperiersystem gemäß einer zweiten Ausgestaltungsform.

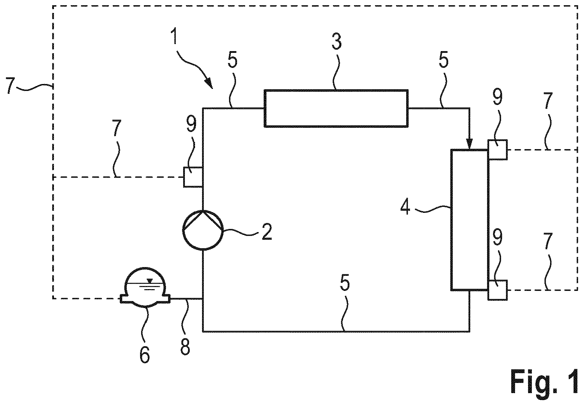

Die Fig. 1 zeigt in vereinfachter Darstellung eine Ausgestaltung eines erfindungsgemäßen Temperiersystems für ein Kraftfahrzeug.

Das Temperiersystem umfasst einen Temperierkreis 1, in den eine Temperiermittelpumpe 2, eine zu temperierende Vorrichtung 3 und ein Temperiermittelkühler 4 integriert sind, wobei diese Komponenten über Temperiermittelleitungen 5 fluidleitend miteinander verbunden sind. Das Temperiersystem umfasst weiterhin einen Ausgleichsbehälter 6, der über eine oder mehrere Entlüftungsleitungen 7 sowie über eine Ausgleichsleitung 8 mit dem Temperierkreis 1 fluidleitend verbunden ist. Erfindungsgemäß ist in die oder in jede der Entlüftungsleitungen 7 ein Schwimmerventil 9 integriert, das derart ausgebildet ist, dass dieses bei einer ausreichend großen Gasansammlung im Bereich eines Schwimmers 10 des Schwimmerventils 9 öffnet.

Die Fig. 1 zeigt insgesamt drei Entlüftungsleitungen 7, die abschnittsweise integral verlaufen, vorbei von diesen drei Entlüftungsleitungen 7 eine, zwei (in beliebiger Kombination) oder alle drei vorgesehen sein können. Zusätzliche Entlüftungsleitungen 7 können ebenfalls vorgesehen sein. Eine erste der Entlüftungsleitungen 7 zweigt aus der Temperiermittelleitung 5 ab, die einen Auslass der Temperiermittelpumpe 2 mit einem Einlass der zu temperierenden Vorrichtung 3 verbindet. Die zwei anderen Entlüftungsleitungen 7 zweigen dagegen jeweils aus einem Sammelkasten 11 des Temperiermittelkühlers 4 ab.

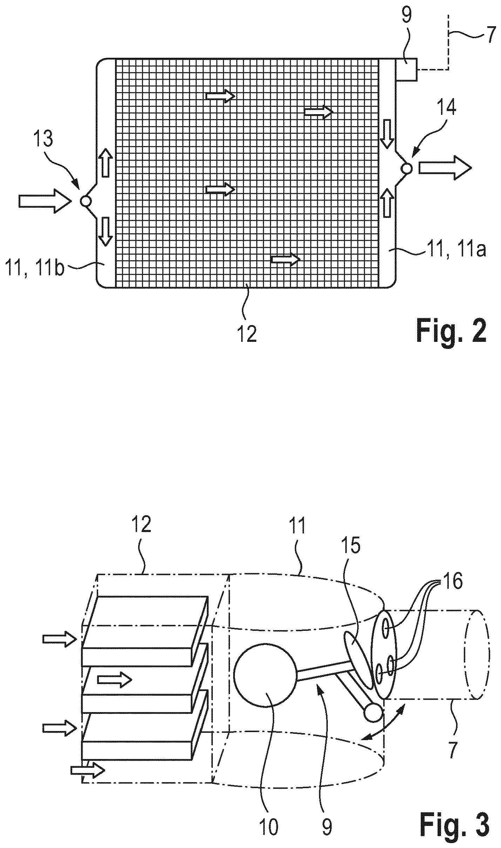

Die Fig. 2 und 3 zeigen einen Temperiermittelkühler 11, bei dem lediglich in den auslassseitigen Sammelkasten 11a eine Entlüftungsleitung 7 mit Schwimmerventil 9 integriert ist. Der Temperiermittelkühler 11 umfasst neben dem auslassseitigen Sammelkasten 11a noch einen einlassseitigen Sammelkasten 11b sowie ein sogenanntes Wärmetauschnetz 12, das eine Vielzahl von Temperiermittelrohren umfasst, die sich zwischen den beiden Sammelkästen 11 in paralleler Ausrichtung erstrecken und dabei fluidleitend mit Innenvolumina der Sammelkästen 11 verbunden sind. Temperiermittel, das über einen Einlass 13 des Temperiermittelkühlers 4 in das Innenvolumen des einlassseitigen Sammelkastens 11b strömt, verteilt sich innerhalb des Innenvolumens dieses Sammelkastens 11b und strömt dann über die Vielzahl der Temperiermittelrohre in das Innenvolumen des auslassseitigen Sammelkastens 11a und wird über einen Auslass 14 des Temperiermittelkühlers 4, der von diesem auslassseitigen Sammelkasten 11a ausgebildet ist, abgeführt. Der Temperiermittelkühler 4 ist dafür vorgesehen, in der Ausrichtung, wie sie in der Fig. 2 dargestellt ist und bei der die Sammelkästen 11 im Wesentlichen vertikal ausgerichtet sind, genutzt zu werden und damit in einer entsprechenden Ausrichtung in einem Kraftfahrzeug integriert zu sein. Dies führt dazu, dass Gase und insbesondere Luft, die in der Strömung des Temperiermittels mitgeführt werden, in den Sammelkästen 11 aufsteigen und sich an den oben liegenden Enden der Innenvolumina der Sammelkästen 11, insbesondere des auslassseitigen Sammelkastens 11a, ansammeln. Diese Stellen eignen sich daher vorteilhaft für die Anordnung eines Abzweigs einer Entlüftungsleitung 7.

Die Fig. 3 zeigt eine mögliche Ausgestaltung eines Schwimmerventils 9 bei der konkreten Integration in den Abzweig einer Entlüftungsleitung 7 aus einem Sammelkasten 11 eines Temperiermittelkühlers 4, wobei ein solches Schwimmerventil 9 grundsätzlich vorteilhaft in jedem erfindungsgemäßen Temperiersystem eingesetzt werden kann. Das Schwimmerventil 9 umfasst einen Ventilkörper 15, der in einer geschlossenen Stellung des Schwimmerventils 9 eine oder mehrere Durchgangsöffnungen 16 der Entlüftungsleitung 7 verschließt, einen mit dem Ventilkörper 15 mechanisch verbundenen Schwimmer 10, der aufgrund einer geringeren (mittleren) Dichte im Vergleich zu dem Temperiermittel in dem Temperiermittel aufschwimmt, wozu der Schwimmer 10 beispielsweise einen gasgefüllten Hohlraum umschließen kann. Die Einheit aus Ventilkörper 15 und Schwimmer 10 ist derart drehbar gelagert, dass bei einem Aufschwimmen des Schwimmers 10 infolge eines entsprechend hohen Füllstands des Temperiermittels in dem oberen Ende des Sammelkastens 11 der Ventilkörper 15 die Durchgangsöffnung(en) 16 der Entlüftungsleitung 7 verschließt. Verringert sich dagegen der Füllstands des Temperiermittels infolge einer entsprechend großen Ansammlung von Gas an diesem oberen Ende des Innenvolumens des Sammelkastens 11, sinkt der Schwimmer 10 schwerkraftbedingt mit dem Füllstand des Temperiermittels ab, wodurch der Ventilkörper 15 die Durchgangsöffnung(en) 16 freigibt. Das angesammelte Gas kann dadurch über die Entlüftungsleitung 7 in den Ausgleichsbehälter 6 strömen, wodurch ein Entlüften des Temperierkreises 1 bewirkt wird.

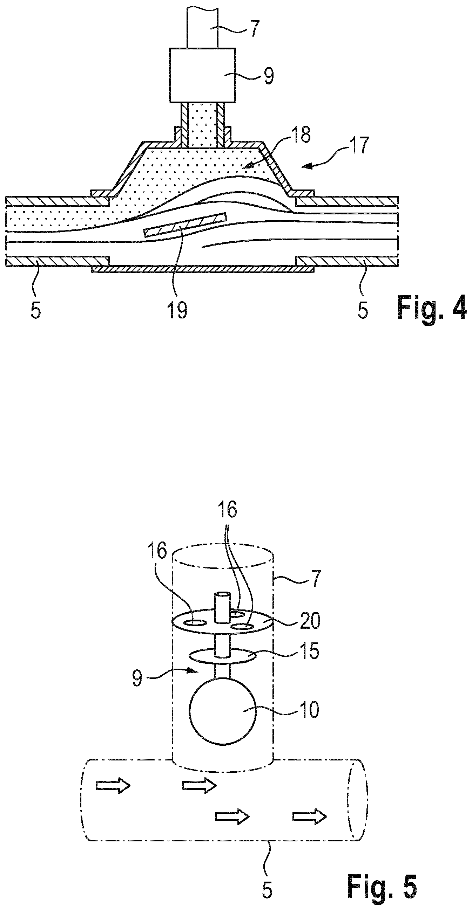

Die Fig. 4 zeigt die Integration eines Gasabscheiders 17 in eine Temperiermittelleitung 5 eines Temperierkreises 1 eines erfindungsgemäßen Temperiersystems, wobei aus dem Gasabscheider 17 eine Entlüftungsleitung 7 mit einem integrierten Schwimmerventil 9 abzweigt. Der Gasabscheider 17 zeichnet sich einerseits durch einen vergrößerten Strömungsquerschnitt im Vergleich zu den angrenzenden Abschnitten der Temperiermittelleitung 5 aus, wobei eine Erweiterung 18 des Strömungsquerschnitts oben liegend ausgebildet ist. Aus dieser Erweiterung 18 des Strömungsquerschnitts geht die Entlüftungsleitung 7 oben liegend ab. Weiterhin umfasst der Gasabscheider 17 ein Strömungsleitelement 19, das die Strömung des Temperiermittels in Richtung der Erweiterung 18 des Strömungsquerschnitts ablenkt. Der Gasabscheider 17 bewirkt ein verstärktes Abscheiden und Ansammeln von Gasen, die von dem Temperiermittel mitgeführt werden, in der Erweiterung 18 des Strömungsquerschnitts, so dass vorteilhaft ein Entlüften über die dort abzweigende Entlüftungsleitung 7 möglich ist.

Die Fig. 5 zeigt eine alternative Ausgestaltungsform eines Schwimmerventils 9, das vorteilhaft in eine Entlüftungsleitung 7 eines erfindungsgemäßen Temperiersystems integriert sein kann. Dieses Schwimmerventil 9 eignet sich beispielsweise zur Integration in eine Entlüftungsleitung 7, die aus einem Gasabscheider 17 gemäß der Fig. 4 abzweigt. Das Schwimmerventil 9 umfasst ebenfalls einen Ventilkörper 15 und einen damit mechanisch verbundenen Schwimmer 10, wobei diese Einheit in Längsrichtung beweglich innerhalb der Entlüftungsleitung 7 angeordnet ist. Diese Beweglichkeit ist durch eine Membran 20, die den Strömungsquerschnitt der Entlüftungsleitung 7 teilweise verschließt, geführt und begrenzt. In die Membran 20 sind eine oder mehrere Durchgangsöffnungen 16 integriert, um ein Überströmen von Gasen zu ermöglichen, wenn das Schwimmerventil 9 geöffnet ist. Das Schwimmerventil 9 ist geschlossen, wenn der Ventilkörper 15 durch den Schwimmer 10 aufgrund eines entsprechend hohen Füllstands des Temperiermittels gegen die Membran 20 gedrückt wird und dadurch die Durchgangsöffnung(en) 16 der Membran 20 verschlossen sind. Sinkt dagegen der Füllstand des Temperiermittels aufgrund einer entsprechenden Ansammlung von Gasen im Bereich des Schwimmerventils 9, senkt sich schwerkraftbedingt der Schwimmer 10 und damit der Ventilkörper 15 ab, wodurch die Durchgangsöffnung(en) 16 in der Membran 20 freigegeben werden und eine Entlüftung der angesammelten Gase erfolgt.

### Bezugszeichenliste

- 1: Temperierkreis
- 2: Temperiermittelpumpe
- 3: zu temperierende Vorrichtung
- 4: Temperiermittelkühler
- 5: Temperiermittelleitung
- 6: Ausgleichsbehälter
- 7: Entlüftungsleitung
- 8: Ausgleichsleitung
- 9: Schwimmerventil
- 10: Schwimmer des Schwimmerventils
- 11: Sammelkasten des Temperiermittelkühlers
- 11a: auslassseitiger Sammelkasten
- 11b: einlassseitiger Sammelkasten
- 12: Wärmetauschnetz des Temperiermittelkühlers
- 13: Einlass des Temperiermittelkühlers
- 14: Auslass des Temperiermittelkühlers
- 15: Ventilkörper des Schwimmerventils
- 16: Durchgangsöffnung der Entlüftungsleitung
- 17: Gasabscheider
- 18: Erweiterung des Strömungsquerschnitts des Gasabscheiders
- 19: Strömungsleitelement des Gasabscheiders
- 20: Membran des Schwimmerventils

## Patentansprüche

1. Temperiersystem mit einem Temperierkreis (1), in den mindestens eine Temperiermittelpumpe (2), eine zu temperierende Vorrichtung (3) und ein Temperiermittelkühler (4), integriert sind, die über Temperiermittelleitungen (5) fluidleitend miteinander verbunden sind, und mit einem Ausgleichsbehälter (6), der mittels einer Entlüftungsleitung (7) und einer Ausgleichsleitung (8) mit dem Temperierkreis (1) verbunden ist, **dadurch gekennzeichnet, dass** in die Entlüftungsleitung (7) ein Schwimmerventil (9) integriert ist, das derart ausgestaltet ist, dass dieses infolge einer Gasansammlung öffnet.

2. Temperiersystem gemäß Anspruch 1, **dadurch gekennzeichnet, dass** das Schwimmerventil (9) in einen Abzweig der Entlüftungsleitung (7) aus dem Temperierkreis (1) oder in eine Mündung der Entlüftungsleitung (7) in den Ausgleichsbehälter (6) oder in einen zentralen Abschnitt der Entlüftungsleitung (7) integriert ist.

3. Temperiersystem gemäß Anspruch 1 oder 2, **dadurch gekennzeichnet, dass** das Schwimmerventil (9) in einen Sammelkasten (11) des Temperiermittelkühlers (4) integriert ist.

4. Temperiersystem gemäß einem der vorhergehenden Ansprüche, **dadurch gekennzeichnet, dass** das Schwimmerventil (9) angrenzend an einen Gasabscheider (17) des Temperierkreises (1) angeordnet ist.

5. Kraftfahrzeug mit einem Temperiersystem gemäß einem der vorhergehenden Ansprüche.
